# EUROPÄISCHE PATENTSCHRIFT

(11) **EP 2 396 883 B1**
(45) Veröffentlichungstag und Bekanntmachung des Hinweises auf die Patenterteilung: **17.04.2013**
(21) Anmeldenummer: 10703229.4
(22) Anmeldetag: 02.02.2010
(51) Int. Cl.: H02P 3/04, B61B 13/04, F16H 1/14, H02K 49/10, B61C 11/00

(54) **ANLAGE**
EQUIPMENT
INSTALLATION

(30) Priorität: 16.02.2009 DE 102009009074
(43) Veröffentlichungstag der Anmeldung: 21.12.2011
(73) Patentinhaber: SEW-EURODRIVE GmbH & Co. KG, 76646 Bruchsal (DE)
(72) Erfinder: KNIEJSKI, Adrian, 75203 Königsbach-Stein (DE); SCHWESINGER, Klaus, 76646 Bruchsal (DE); BÖCKLE, Jürgen, 76646 Bruchsal (DE); DEGEN, Dirk, 76646 Bruchsal (DE)
(86) Internationale Anmeldenummer: PCT/EP2010/000597
(87) Internationale Veröffentlichungsnummer: WO 2010/091799

(56) Entgegenhaltungen:
- CN-Y- 201 180 775
- DE-A1- 4 436 603
- DE-A1-102008 005 385
- FR-A1- 2 838 494
- JP-A- 2 102 947
- US-A1- 2001 037 747

## Beschreibung

Die Erfindung betrifft eine Anlage.

Es ist bekannt, Rotoren von Synchronmotoren an ihrem Umfang mit Dauermagneten zu bestücken.

**Aus der** DE 10 2008 005385 A1 **ist ein schienengeführter Wagen bekannt, bei dem ein Polradantrieb vorgesehen ist.**

**Aus der** US 2001/ 0037747 A1 **ist ein Schienensystem bekannt.**

Der Erfindung liegt daher die Aufgabe zugrunde, ein Anlage mit mindestens einem Antriebssystem weiter zu verbessern, wobei Verluste klein zu halten sind.

Erfindungsgemäß wird die Aufgabe bei der Anlage nach den in Anspruch 1 angegebenen Merkmalen gelöst.

Wichtige Merkmale der Erfindung bei der Anlage, dass sie einen ersten und einen zum ersten relativ bewegbar angeordneten zweiten Teil umfasst,
wobei der erste Teil ein in Bewegungsrichtung sich erstreckendes, insbesondere langgestreckt ausgeführtes Schwertteil aufweist,
wobei der zweite Teil zumindest zwei drehbar gelagerte, antreibbare Scheiben mit jeweils einem konusförmigem Abschnitt umfasst, wobei die Drehachsen der Scheiben sich schneiden, wobei die Konusspitze oder Verjüngungsrichtung der konusförmigen Abschnitte in Richtung des Schnittpunktes weist,
wobei die Drehachsen senkrecht zur Bewegungsrichtung ausgerichtet sind,
wobei das Schwertteil zwischen den konusförmigen Abschnitten der Scheiben angeordnet ist,
wobei die Scheiben an ihrem Umfang im jeweiligen konusförmigen Abschnitt jeweils Dauermagnete aufweisen, deren Magnetisierungsrichtung jeweils zum in Umfangsrichtung nächstbenachbarten Dauermagneten abwechselnde Richtung aufweist, insbesondere senkrecht zur Oberfläche des jeweiligen konusförmigen Abschnitts
wobei die Scheiben magnetisch gekoppelt angeordnet sind.

Von Vorteil ist dabei, dass die Vortriebskraft mit Wirbelströmen erzeugt wird. Mittels der Orientierung der Drehachsen der Scheiben sind Verluste beim Annähern der Dauermagnete an das Schwertteil verringerbar. Bei anderen Orientierungen sind diese Verluste größer und es entstehen auch Kraftkomponenten in anderen Richtungen, so dass nicht nur Vorschubskraft in Bewegungsrichtung entsteht. Dies gilt insbesondere bei Orientierungen, bei denen die Drehachsen der Scheiben identisch ausgerichtet sind. Bei der Erfindung entsteht der wesentliche Teil der Vorschubkraft nur in Bewegungsrichtung. Denn der wesentliche Teil der Vorschubskraft wird tangential zur Bewegungsrichtung des jeweiligen Dauermagneten erzeugt, wobei die Kraft bei abnehmendem Abstand des jeweiligen Dauermagneten zum Schwertteil stark zunimmt. Der Dauermagnet taucht sozusagen in den Wirbelstrom-Wirkbereich ein und dann wieder aus.

Mittels der magnetischen Kopplung wird die synchrone Bewegung der Scheiben sicher gestellt ohne weitere zusätzliche Mittel. Außerdem ist kein Antriebsmotor für die zweite Scheibe notwendig.

Die magnetische Kopplung ist auf der gleichen Welle Anordenbar wie auch die Scheiben und somit über deren Lager lagerbar. Es ist also kein zusätzlicher Aufwand notwendig, insbesondere auch kein zusätzliches Gehäuse.

Bei der Erfindung ist eine variable Kraftübertragung ermöglicht mittels Winkel anpassung und weiteren geometrischen Anpassungen. Beispielsweise ist mittels Veränderung des Luftspaltes innerhalb der magnetischen Kopplung eine Anpassung der Kopplungskraft ermöglicht.

Bei einer vorteilhaften Ausgestaltung ist das Schwertteil Teilbereich eines Schienensystems oder einer Schiene, wobei das Schienensystem oder die Schiene auch Führungsbereiche für Rollen des als Fahrzeug ausgebildeten zweiten Teils aufweist, insbesondere wobei das Schienensystem oder die Schiene einstückig ausgebildet ist. Von Vorteil ist dabei, dass eine einfache integrierte Herstellung ausführbar ist.

Bei einer vorteilhaften Ausgestaltung sind die Scheiben von Elektromotoren antreibbar, insbesondere von Drehstrommotoren, insbesondere von winkelsynchron angesteuerten Synchronmotoren. Von Vorteil ist dabei, dass einfache kostengünstige Mittel anwendbar sind.

Bei einer vorteilhaften Ausgestaltung sind die konusförmigen Abschnitte in einem jeweils derartigen axialen Bereich der Drehachsen angeordnet, dass Ebenen, deren Normalenrichtung Drehachsenrichtung ist und die im axialen Bereich angeordnet sind, eine nicht-leere Schnittmenge aufweisen, wenn sie nicht parallel zueinander sind: Von Vorteil ist dabei, dass ein sehr hoher Wirkungsgrad erreichbar ist, da bei der Drehbewegung sehr starke Magnetfeldlinien in das Schwertteil eingeleitet werden, wodurch sehr hohe Wirbelströme erzeugt werden.

Bei einer vorteilhaften Ausgestaltung ist das Schwertprofil in der Vereiniguhgsmenge der Schnittmengen angeordnet. Von Vorteil ist dabei, dass möglichst starke Magnetfeldlinien einlenkbar sind ins Schwertprofil.

Bei einer vorteilhaften Ausgestaltung ist jeder Dauermagnet aus zwei oder mehr einzelnen Dauermagneten ausgeführt, die senkrecht zur Oberfläche des jeweiligen konusförmigen Abschnittes übereinander angeordnet sind. Von Vorteil ist dabei, dass ein noch stärkeres Magnetfeld und somit auch eine höhere Vorschubkraft erzeugbar ist.

Bei einer vorteilhaften Ausgestaltung ist jeder Dauermagnet aus zwei oder mehr einzelnen Dauermagneten ausgeführt, die im konusförmigen Abschnitt in Umfangsrichtung nebeneinander angeordnet sind. Von Vorteil ist dabei, dass ein höherer Wirkungsgrad erreichbar ist.

Bei einer vorteilhaften Ausgestaltung ist das Schwertteil aus Aluminium oder Kupfer oder einem anderen besser als Stahl elektrisch leitfähigen Material gefertigt. Von Vorteil ist dabei, dass geringere Verluste auftreten als bei Verwendung von Stahl.

Bei einer vorteilhaften Ausgestaltung ist das Schwertteil aus ein Stranggussprofil. Von Vorteil ist dabei, dass eine einfache Herstellung ermöglicht ist.

Bei einer vorteilhaften Ausgestaltung ist eine derartige magnetische Kupplung vorgesehen: dass die beiden Scheiben synchron betreibbar sind. Von Vorteil ist dabei, dass Verluste reduzierbar sind.

Bei einer vorteilhaften Ausgestaltung ist die Antriebskraft mittels im Schwertteil induzierten Wirbelströmen erzeugbar, insbesondere durch bei Vorbeidrehen der Scheiben am Schwertteil entlang. Von Vorteil ist dabei, dass ein sanftes Antreiben ermöglicht ist. Insbesondere ist es ermöglicht durch synchrones Betreiben der Scheiben einen Winkelversatz einzustellen, so dass die Vortriebskraft sehr schnell und einfach veränderbar ist.

Bei einer vorteilhaften Ausgestaltung ist jeweils auf einem mit der jeweiligen Scheibe drehfest verbundenen Teil eine Stützrolle gelagert vorgesehen, insbesondere mittels Kugellager gelagert, wobei die Stützrolle am Schienensystem oder an der Schiene abrollbar und/oder führbar ist. Von Vorteil ist dabei, dass die Lagerung für die Stützrolle nur einer relative Drehzahldifferenz ausgesetzt ist zwischen der der Fahrzeuggeschwindigkeit entsprechenden Drehzahl der am Schienensystem abrollenden Stützrolle, insbesondere schlupffrei abrollenden Stützrolle, und der Drehzahl der Rotorwelle zum Antreiben der Scheibe. Die letztgenannte Drehzahl ist im Normalbetrieb viel höher als die erstere, wenn eine hohe Vortriebskraft erzeugt werden soll. Bei Verschwinden der genannten Drehzahldifferenz sind nur unwesentliche Wirbelstrombeträge erzielbar und somit keine wesentlichen Vorschubkräfte.

Bei einer vorteilhaften Ausgestaltung ist am Schienensystem oder an der Schiene der Abrollbereich oder Führungsbereich für die Stützrolle und/oder an der Stützrolle die Außenfläche derart konkav, insbesondere auf beiden zu den jeweiligen Scheiben zugewandten Seiten des Schienensystems, dass bei Auslenkung des Fahrzeuges von seiner Soll-Orientierung Rückstellkräfte zur Stabilisierung der Soll-Orientierung wirksam sind. Von Vorteil ist dabei, dass eine Selbststabilisierung durch zwei konkave Profilbereiche am Schienensystem erzielbar ist, indem die konkaven Bereiche zueinander hin ausgerichtet sind. Somit führt eine Auslenkung zu einer derartigen Verschiebung des Schwerpunktes, dass eine rückstellende Kraft erzeugt wird, wobei nur die Gravitationskraft ursächlich ist.

Bei einer vorteilhaften Ausgestaltung ist an jeder Scheibe ein magnetisches Kupplungsteil vorgesehen, das in Umfangsrichtung nacheinander angeordnete Paare von Dauermagneten aufwiest, wobei jedes Paar jeweils einen ersten Dauermagnet aufweist, der eine nach außen, insbesondere also senkrecht zur Konusoberfläche, gerichtete Magnetisierungsrichtung aufweist, und einen zweiten Dauermagnet, der eine nach innen, insbesondere also senkrecht zur Konusoberfläche, gerichtete Magnetisierungsrichtung aufweist. Von Vorteil ist dabei, dass besonders hohe Kupplungskräfte in einem besonders kompakten Raumbereich erzielbar sind. Denn durch die Anordnung der Dauermagnete des Kupplungsteils erscheint zum anderen Kupplungsteil hin ein in Umfangsrichtung magnetisierter Dauermagnet, so dass die Dauermagnete der beiden Kupplungsteile stark anziehende Kräfte aufweisen.

Erfindungsgemäß sind also an jedem Kupplungsteil in Umfangsrichtung voneinander beabstandete Dauermagnete vorsehbar, die in Umfangsrichtung magnetisiert sind.

Bei einer vorteilhaften Ausgestaltung sind die in Umfangsrichtung magnetisierten Dauermagnete beziehungsweise das einen jeweiligen solchen realisierendes Paar jeweils in einer Ausnehmung oder Vertiefung, insbesondere Nut, eines von dem jeweiligen magnetischen Kupplungsteil umfassten Blechpakets oder Stahlteils vorgesehen. Von Vorteil ist dabei, dass die Beabstandung mittels Stahl oder Eisen ausführbar ist und somit die Magnetfeldlinien stark bündelbar sind und ein nur kleiner Luftspalt zwischen den Kupplungsteilen erreichbar ist.

Bei einer vorteilhaften Ausgestaltung weist das Kupplungsteil in Umfangsrichtung jeweils abwechselnd einen in Umfangsrichtung magnetisierten Dauermagneten und ein Eisen-haltiges Teil, insbesondere Stahlteil oder Stahlblechteil, auf, insbesondere das Kupplungsteil in Umfangsrichtung eine periodische Abfolge von Dauermagnet und Eisen-haltigem Teil, insbesondere Stahlteil oder Stahlblechteil. Von Vorteil ist dabei, dass ein besonders effektiver und einfacher Aufbau ermöglicht ist.

Weitere Vorteile ergeben sich aus den Unteransprüchen.

### Bezugszeichenliste

- 1: Elektromotor
- 3: Scheibe
- 4: Scheibe
- 5: Schwertteil, insbesondere Schienenteil
- 10: erstes Kupplungsteil
- 11: zweites Kupplungsteil
- 20: Dauermagnete, nach außen gerichtete Nordpole
- 21: Dauermagnete, nach außen gerichtete Südpole
- 30: Stützrollen
- 31: Stützrollen
- 32: Schienenteil
- 33: Schienenteil
- Fe: Stahlblechpaket oder Stahlteil
- N: Nordpol eines Dauermagneten
- S: Südpol eines Dauermagneten

Die Erfindung wird nun anhand von Abbildungen näher erläutert:

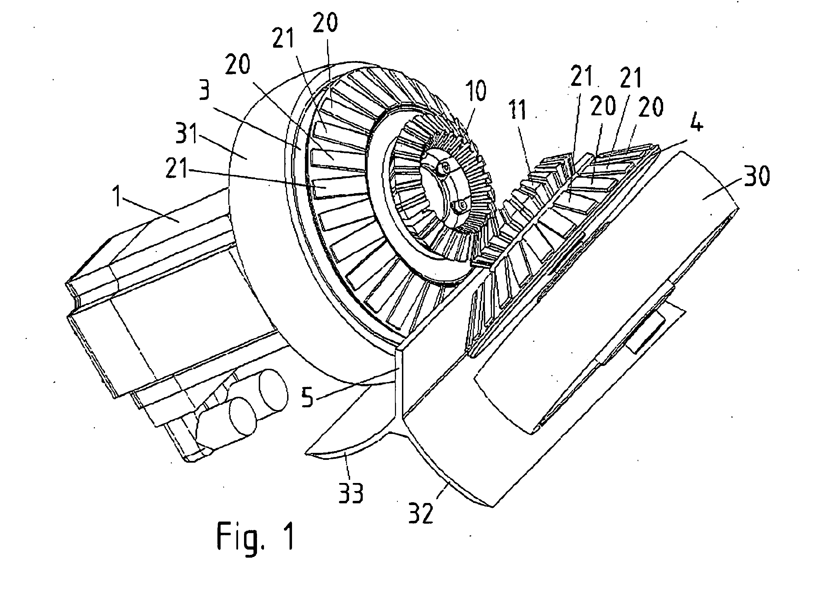

In der Figur 1 ist eine erfindungsgemäße Vorrichtung schematisch skizziert in Schrägansicht, wobei eine Schiene mit Schwertteil 5 und Schienenteilen (32, 33) zur Führung der Stützrollen (30, 31) gezeigt sind und außerdem ein Elektromotor 1, welcher eine Scheibe 3 antreibt an der ein erstes Kupplungsteil 10 vorgesehen ist, das magnetisch gekoppelt ist mit einem zweiten Kupplungsteil 11, das auf einer anderen Drehachse oder Welle angeordnet ist, auf der die Stützrolle 30 gelagert ist, wobei die Scheibe 4 drehfest mit dem Kupplungsteil 11 verbunden ist.

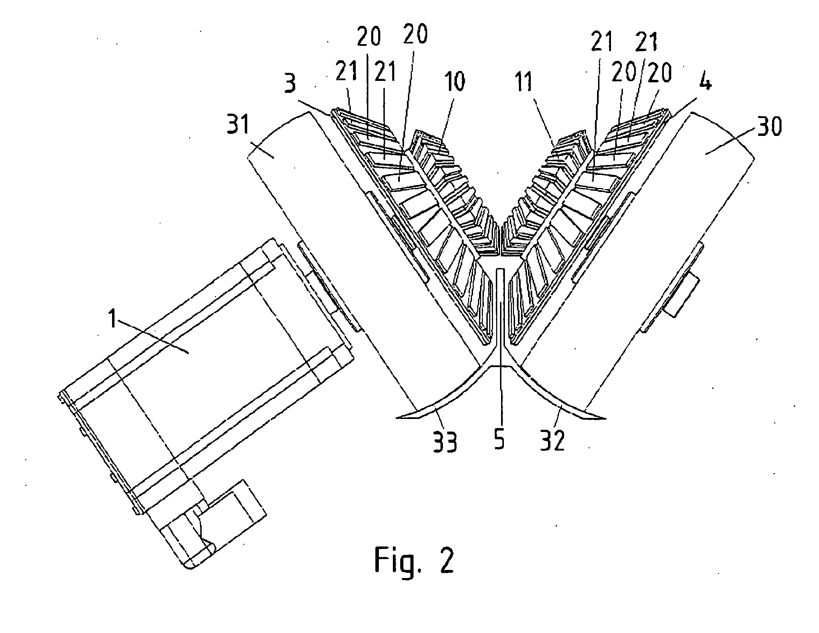

In Figur 2 ist die zugehörige Draufsicht gezeigt, wobei die konkave Ausformung der Stützrollen (30, 31) und der Schienenteile (32, 33) deutlich gemacht ist.

Mittels der magnetischen Kopplung der beiden Scheiben ist ein synchrones, insbesondere winkelsynchrones, Drehbewegen durch den Motor 1 ausführbar. Hierzu muss allerdings die Kopplungsstärke der magnetischen Kupplung (10, 11), also das hierdurch maximal übertragbare Drehmoment, stärker sein als das beim Betrieb bewirkte auf die Scheibe 4 wirkende Antriebsdrehmoment und/oder die von Lagerungen erzeugten Reibmomente.

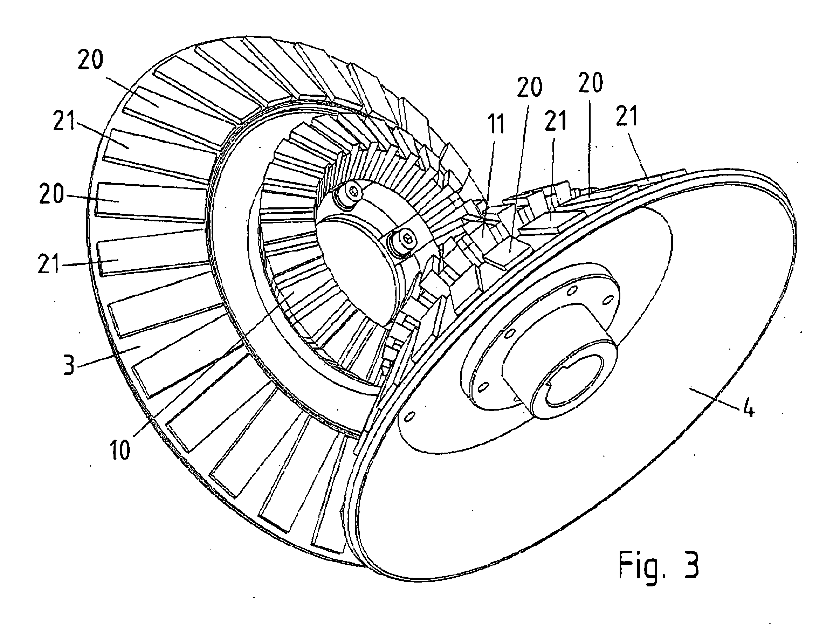

In Figur 3 sind nur die beiden Scheiben (3, 4) mit dem verbundenen Kupplungsteilen (10, 11) gezeigt. Am Außenumfang der konischen Abschnitte der Scheiben sind Dauermagnete 20 mit nach außen gerichtetem Nordpol oder Dauermagnete 21 mit nach außen gerichtetem Südpol vorgesehen.

Zum Antreiben des Antriebssystems ist also nur ein einziger Motor notwendig und auf eine elektronische Regelung zur Steuerung der Winkelsynchronität kann verzichtet werden. Somit ist die Erfindung einfach und kostengünstig ausführbar.

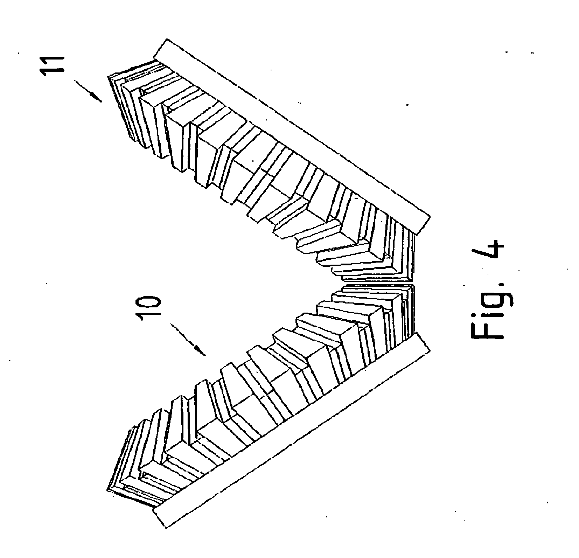

In Figur 4 ist die magnetische Kopplung, umfassend das erste und zweite Kopplungsteil (10, 11) selbst genauer gezeigt, wobei die Scheiben ausgeblendet sind.

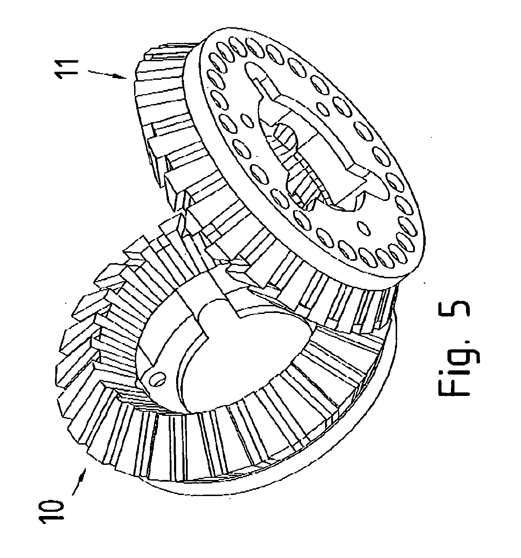

In der Figur 5 ist die magnetische Kopplung aus einer anderen Blickrichtung dargestellt.

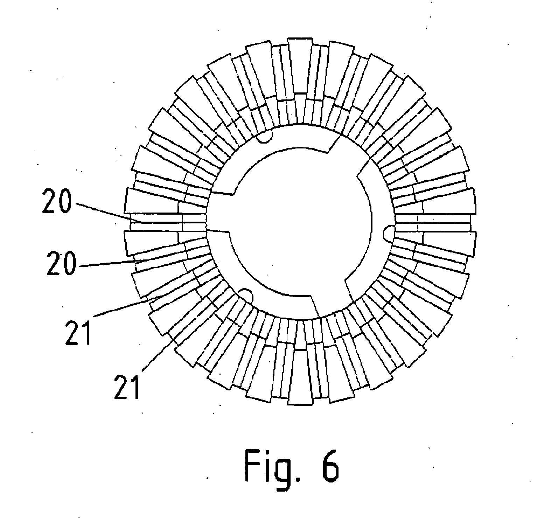

In der Figur 6 ist eines der Kupplungsteile (10, 11) näher dargestellt, wobei die beiden Kupplungsteile (10, 11) gleichartig ausführbar sind.

Hierbei sind in Umfangsrichtung abwechselnd jeweils ein Paar von Dauermagneten, bestehend aus einem Dauermagneten mit nach außen gerichtetem Nordpol N und einem Dauermagneten mit nach außen gerichtetem Südpol S, und zahnartigen Vorsprüngen eines Stahlblechpakets angeordnet. Dabei ist das Paar in der Nut beispielsweise stoffschlüssig, insbesondere klebend, verbunden.

Das Antriebssystem ist für ein Schienenfahrzeug geeignet, das ein Fahrzeuggestänge aufweist, das mittels Rollen an der Schiene, umfassend Schwertteil und Schienenteile (31, 33) positionierbar und entlang dieser Schiene verfahrbar angeordnet ist. An dem Schienenfahrzeug sind sogar zwei Antriebssysteme, nämlich ein vorderes und ein hinteres, oder mehr Antriebssysteme anbringbar. Die Antriebssysteme sind im Wesentlichen jeweils der Figur 1 und 2 entsprechend ausgeführt.

Wie in Figur 1 verdeutlicht, treibt der Elektromotor 1 eine Scheibe 3 und das Kupplungsteil 10 an. Mittels der starken magnetischen Kopplung des vom jeweiligen Paar erzeugten Magnetfeldes zum entsprechenden Magnetfeldverlauf des Kupplungsteils 11 wird dieses angetrieben, also ein Teil des vom Motor 1 erzeugten Drehmoments übertragen und steht somit der Scheibe 4 zur Erzeugung einer Vortriebskraft nach dem Wirbelstromprinzip unter Wirkverbindung mit dem Schwertteil 5 zur Verfügung. Außerdem sind Reibmomente überwindbar, wie beispielsweise das vom Lager der Stützrolle erzeugte Reibmoment oder auch anderweitige Reibmomente.

Die Lagerung der Scheibe 4, insbesondere Kugellager, ist an einem in der Figur nicht gezeigten Fahrzeuggestänge gelagert. Ebenso ist der Motor 1 und die Lagerung der Scheibe 3 am Fahrzeuggestänge befestigt.

Mittels der weiteren am Fahrzeuggestänge gelagerten Rollen ist dann das Fahrzeug relativ bewegbar entlang dem Schwertteil 5 eines Schienensystems angeordnet.

Der Motor 1 und die Scheiben (3, 4) bilden ein an einem Fahrzeug anbringbares Antriebssystem, wobei Führungsräder des Fahrzeuges an einem Schienensystem oder Schienenteil abrollbar sind, so dass das Fahrzeug am Schienensystem geführt ist.

Die Scheiben (3, 4) sind konisch ausgeführt und weisen an ihrem äußeren Umfang des konischen Bereichs Dauermagnete auf, deren Magnetisierungsrichtung im Vergleich zur Magnetisierungsrichtung der in Umfangsrichtung nächstbenachbarten Dauermagnete radial und entgegengesetzt ausgerichtet ist. Zwischen den Magneten ist in Umfangsrichtung ein Abstand ausgeführt.

Die Drehachsen der Scheiben (3, 4) schneiden sich und sind senkrecht zur Bewegungsrichtung orientiert. Das Schwertteil ist entlang der Bewegungsrichtung langgestreckt ausgeführt und ist vorzugsweise als Stranggussteil fertigbar. Am Schwertteil 5 sind auch die weiteren Schienenteile (32, 33) vorgesehen, die zur Führung der Rollen (30, 31) dienen und zusammen mit dem Schwertteil die Schiene beziehungsweise das Schienensystem bilden. Vorzugsweise ist das Schwertteil 5 aus Aluminium oder Kupfer ausgeführt oder aus einem entsprechend elektrisch leitfähigen Material.

Die Bewegungsrichtung entspricht der Normalenrichtung derjenigen Ebene, welche mittels der Drehachsen der Scheiben (3, 4) aufgespannt ist, in welcher also die Drehachsen enthalten sind.

Bei hoher Drehzahl der Scheiben (3, 4) werden Wirbelströme im Schwertteil 5 erzeugt, da die am Schwertteil 5 vorbeidrehenden Scheiben diese erzeugen und somit eine Antriebskraft zwischen Schwertteil 5 und Scheiben (3, 4) bewirkt ist.

Der Motor 1 ist als Drehstrommotor ausführbar, wie beispielsweise Asynchronmotor oder Synchronmotor. Dabei werden die Motoren von jeweiligen Umrichtern gespeist und somit auch gesteuert. Hierbei wird als Ziel der Regelung eine Synchronität der Scheiben gesetzt, damit das in das Schwertteil eindringende, von den Dauermagneten beider Scheiben erzeugte Magnetfeld möglichst stark ist und somit möglichst große Wirbelströme erzeugt und daher auch große Vortriebskräfte.

Der Abstand zwischen den Scheiben (3, 4) ist etwas größer als die Dicke des Schwertteils 5, so dass auch unter Berücksichtigung von Fertigungstoleranzen keine Berührung statt findet zwischen dem Schwertteil 5 und den Scheiben (3, 4). Denn die Drehzahl der Scheiben ist viel höher als die Drehzahl eines gedachten, am Schwertteil ohne Schlupf abrollenden Rades.

Die Schiene umfasst also die Führungsbereiche für Rollen und die Schienenteile (32,33) zur Führung der Stützrollen (30, 31). Dabei ist die Stützrolle 31auf der die Scheibe 31 antreibenden Rotorwelle gelagert vorgesehen und die Stützrolle 30 auf der Drehachse der Scheibe 4.

Die Konus sind mit ihrer spitzen Seite hin orientiert zum Schnittpunkt der Drehachsen der Scheiben (3, 4).

In der Figur 2 sind die Dauermagnete 20 mit nach außen gerichteten Nordpolen und die Dauermagnete 21 mit nach außen gerichtete Südpolen gezeigt.

Vorzugsweise weist das Fahrzeug eine Steuereinheit auf, die den Motor eines vorderen und eines analog ausgebildeten hinteren Antriebssystems derart ansteuert, dass Winkelsynchronität Ziel der in der Steuereinheit integriert ausgebildeten Regelung ist.

Mittels der Stützrollen (30, 31) ist ein Konstanthalten des Abstandes zwischen dem Schwertteil 5 und den konusförmigen Abschnitten der Scheiben (3, 4) ermöglicht. Außerdem ist bei kurvenförmigen verlaufenden Schienenabschnitten ermöglicht, den gedachten Drehpunkt, insbesondere Umlenkpunkt, hierfür in den Bereich der Stützrolle zu positionieren, also beispielsweise den Schwerpunkt der Stützrolle als solchen gedachten Drehpunkt zu verwenden. Auf diese Weise sind also sogar sehr eng verlaufende Kurven ermöglicht. Unter Kurve wird hier insbesondere auch eine steigungsbedingter Kurvenverlauf verstanden.

Bei einem erfindungsgemäßen alternativen Ausführungsbeispiel sind der Motor 1 und die Scheiben (3, 4) stationär angeordnet und der verfahrbare Anlagenteil umfasst dann das Schwertteil 5 samt Schienenteilen (32, 33).

Bei weiteren erfindungsgemäßen Ausführungsbeispielen beträgt der Winkel zwischen den Drehachsen zwischen 40° und 100°. Besonders vorteilhaft hat sich ein Wert von etwa 70° erwiesen, insbesondere also ein Wert aus dem Bereich zwischen 60° und 80°. Der Öffnungswinkel des Konus, also der Winkel der Geraden, welche diejenigen Geradenabschnitte umfassen, die als Schnittgebilde zwischen der die Drehachsen enthaltenden Ebene und dem konusförmigen Abschnitt einer der Scheiben entstehen, entspricht im Wesentlichen ebenfalls dem genannten Winkel zwischen den Drehachsen.

## Patentansprüche

1. Anlage, umfassend einen ersten und einen zum ersten relativ bewegbar angeordneten zweiten Teil,
wobei der erste Teil ein in Bewegungsrichtung sich erstreckendes, insbesondere langgestreckt ausgeführtes Schwertteil aufweist,
**dadurch gekennzeichnet, dass**
der zweite Teil zumindest zwei drehbar gelagerte, antreibbare Scheiben (3, 4) mit jeweils einem **konusförmigem Abschnitt** umfasst, wobei die Drehachsen der Scheiben (3, 4) sich schneiden, wobei die Konusspitze oder Verjüngungsrichtung der konusförmigen Abschnitte in Richtung des Schnittpunktes weist,
wobei die Drehachsen senkrecht zur Bewegungsrichtung ausgerichtet sind,
wobei das Schwertteil (5) zwischen den konusförmigen Abschnitten der Scheiben (3, 4) angeordnet ist,
wobei die Scheiben (3, 4) an ihrem Umfang im jeweiligen konusförmigen Abschnitt jeweils Dauermagnete (20) aufweisen, deren Magnetisierungsrichtung jeweils zum in Umfangsrichtung nächstbenachbarten Dauermagneten (21) abwechselnde Richtung aufweist, insbesondere senkrecht zur Oberfläche des jeweiligen konusförmigen Abschnitts,
wobei die Scheiben (3, 4) magnetisch gekoppelt angeordnet sind,
wobei eine der Scheiben von einem auf dem zweiten Teil angeordneten Elektromotor (1) antreibbar ist, welcher die Scheibe (3) antreibt an der ein erstes Kupplungsteil (10) vorgesehen ist, das magnetisch gekoppelt ist mit einem zweiten Kupplungsteil (11), das auf einer anderen Drehachse oder Welle angeordnet ist, auf der die Stützrolle (30) gelagert ist, wobei die Scheibe (4) drehfest mit dem Kupplungsteil (11) verbunden ist

2. Anlage nach mindestens einem der vorangegangenen Ansprüche,
**dadurch gekennzeichnet, dass**
das Schwertteil (5) Teilbereich eines Schienensystems oder einer Schiene ist, wobei das Schienensystem oder die Schiene auch Führungsbereiche für Rollen des als Fahrzeug ausgebildeten zweiten Teils aufweist, insbesondere wobei das Schienensystem oder die Schiene einstückig ausgebildet ist.

3. Anlage nach mindestens einem der vorangegangenen Ansprüche,
**dadurch gekennzeichnet, dass**
zumindest eine der Scheiben (3, 4) von einem Elektromotor (1) antreibbar ist, insbesondere von einem Drehstrommotor, insbesondere von einem winkelsynchron angesteuerten Synchronmotor.

4. Anlage nach mindestens einem der vorangegangenen Ansprüche,
**dadurch gekennzeichnet, dass**
die konusförmigen Abschnitte in einem jeweils derartigen axialen Bereich der Drehachsen angeordnet sind, dass Ebenen, deren Normalenrichtung Drehachsenrichtung ist und die im axialen Bereich angeordnet sind, eine nicht-leere Schnittmenge aufweisen, wenn sie nicht parallel zueinander sind,

5. Anlage nach mindestens einem der vorangegangenen Ansprüche,
**dadurch gekennzeichnet, dass**
das Schwertprofil (5) in der Vereinigungsmenge der Schnittmengen angeordnet ist.

6. Anlage nach mindestens einem der vorangegangenen Ansprüche,
**dadurch gekennzeichnet, dass**
jeder Dauermagnet (20, 21) aus zwei oder mehr einzelnen Dauermagneten (20, 21)ausgeführt ist, die senkrecht zur Oberfläche des jeweiligen konusförmigen Abschnittes übereinander angeordnet sind.

7. Anlage nach mindestens einem der vorangegangenen Ansprüche,
**dadurch gekennzeichnet, dass**
jeder Dauermagnet (20, 21)aus zwei oder mehr einzelnen Dauermagneten (20, 21) ausgeführt ist, die im konusförmigen Abschnitt in Umfangsrichtung nebeneinander angeordnet sind.

8. Anlage nach mindestens einem der vorangegangenen Ansprüche,
**dadurch gekennzeichnet, dass**
das Schwertteil (5) aus Aluminium gefertigt ist und/oder dass
das Schwertteil (5) aus einem Stranggussprofil gefertigt ist.

9. Anlage nach mindestens einem der vorangegangenen Ansprüche,
**dadurch gekennzeichnet, dass**
die Kopplung derartig vorgesehen ist, dass die beiden Antriebe der Scheiben (3, 4) synchron betreibbar sind.

10. Anlage nach mindestens einem der vorangegangenen Ansprüche,
**dadurch gekennzeichnet, dass**
die Antriebskraft mittels im Schwertteil (5) induzierten Wirbelströmen erzeugbar ist, insbesondere durch Vorbeidrehen der Scheiben (3, 4) am Schwertteil entlang, insbesondere der Scheiben (3, 4) mit ihren Dauermagneten (20, 21).

11. Anlage nach mindestens einem der vorangegangenen Ansprüche,
**dadurch gekennzeichnet, dass**
jeweils auf einem mit der jeweiligen Scheibe (3, 4) drehfest verbundenen Teil eine Stützrolle gelagert vorgesehen ist, insbesondere mittels Kugellager gelagert, wobei die Stützrolle am Schienensystem oder an der Schiene abrollbar und/oder führbar ist.

12. Anlage nach mindestens einem der vorangegangenen Ansprüche,
**dadurch gekennzeichnet, dass**
am Schienensystem oder an der Schiene der Abrollbereich oder Führungsbereich für die Stützrolle und/oder an der Stützrolle die Außenfläche derart konkav ist, insbesondere auf beiden zu den jeweiligen Scheiben (3, 4) zugewandten Seiten des Schienensystems, dass bei Auslenkung des Fahrzeuges von seiner Soll-Orientierung Rückstellkräfte zur Stabilisierung der Soll-Orientierung wirksam sind.

13. Anlage nach mindestens einem der vorangegangenen Ansprüche,
**dadurch gekennzeichnet, dass**
an jeder Scheibe (3, 4) ein magnetisches Kupplungsteil (10, 11) vorgesehen ist, das in Umfangsrichtung nacheinander angeordnete Dauermagnete aufweist, die in Umfangsrichtung magnetisiert sind, oder Paare von Dauermagneten aufweist, wobei jedes Paar jeweils einen ersten Dauermagnet aufweist, der eine nach außen, insbesondere also senkrecht zur Konusoberfläche, gerichtete Magnetisierungsrichtung aufweist, und einen zweiten Dauermagnet, der eine nach innen, insbesondere also senkrecht zur Konusoberfläche, gerichtete Magnetisierungsrichtung aufweist.

14. Anlage nach mindestens einem der vorangegangenen Ansprüche,
**dadurch gekennzeichnet, dass**
die in Umfangsrichtung magnetisierten Dauermagnete oder die Paare jeweils in einer Ausnehmung oder Vertiefung, insbesondere Nut, eines von dem jeweiligen magnetischen Kupplungsteil (10, 11) umfassten Blechpakets oder Stahlteils vorgesehen sind.

15. Anlage nach mindestens einem der vorangegangenen Ansprüche,
**dadurch gekennzeichnet, dass**
das Kupplungsteil (10, 11) in Umfangsrichtung jeweils abwechselnd ein in Umfangsrichtung magnetisierter Dauermagnet, insbesondere realisiert als Paar von Dauermagneten, und ein Eisen-haltiges Teil, insbesondere Stahlteil oder Stahlblechteil, aufweist, insbesondere das Kupplungsteil in Umfangsrichtung eine periodische Abfolge von Dauermagnet und Eisen-haltigem Teil, insbesondere Stahlteil oder Stahlblechteil, aufweist.

## Claims

1. An installation, comprising a first part and a second part arranged movably relative to the first part,
the first part being a tongue part, in particular an elongate one, extending in the direction of movement,
**characterised in that**
the second part comprises at least two rotatably mounted, drivable discs (3, 4) with in each case a cone-shaped section, the axes of rotation of the discs (3, 4) intersecting, the cone tip or direction of tapering of the cone-shaped sections pointing in the direction of the point of intersection,
the axes of rotation being oriented perpendicular to the direction of movement,
the tongue part (5) being arranged between the cone-shaped sections of the discs (3, 4), the discs (3, 4) having on their periphery in the respective cone-shaped section in each case permanent magnets (20), the direction of magnetisation of which in each case has the alternate direction to the next adjacent permanent magnet (21) in the peripheral direction, in particular perpendicular to the surface of the respective cone-shaped section,
the discs (3, 4) being arranged to be magnetically coupled,
one of the discs being able to be driven by an electric motor (1) arranged on the second part, which motor drives the disc (3) on which a first coupling part (10) is provided which is magnetically coupled with a second coupling part (11) which is arranged on another axis of rotation or shaft, on which the supporting roller (30) is mounted, the disc (4) being connected for co-rotation to the coupling part (11).

2. An installation according to at least one of the preceding claims,
**characterised in that**
the tongue part (5) is a partial region of a rail system or a rail, the rail system or the rail also having guide regions for rollers of the second part, which is formed as a vehicle, in particular the rail system or the rail being formed in one piece.

3. An installation according to at least one of the preceding claims,
**characterised in that**
at least one of the discs (3, 4) can be driven by an electric motor (1), in particular by a three-phase motor, in particular by a synchronous motor which is controlled in angularly aligned manner.

4. An installation according to at least one of the preceding claims,
**characterised in that**
the cone-shaped sections are arranged in an axial region of the axes of rotation which is such in each case that planes, the normal direction of which is the axis-of-rotation direction and which are arranged in the axial region, have a non-empty intersecting set if they are not parallel to one another.

5. An installation according to at least one of the preceding claims,
**characterised in that**
the tongue profile (5) is arranged in the set union of the intersecting sets.

6. An installation according to at least one of the preceding claims,
**characterised in that**
each permanent magnet (20, 21) is formed from two or more individual permanent magnets (20, 21) which are arranged one above another perpendicular to the surface of the respective cone-shaped section.

7. An installation according to at least one of the preceding claims,
**characterised in that**
each permanent magnet (20, 21) is formed from two or more individual permanent magnets (20, 21) which are arranged next to one another in the cone-shaped section in the peripheral direction.

8. An installation according to at least one of the preceding claims,
**characterised in that**
the tongue part (5) is manufactured from aluminium and/or **in that** the tongue part (5) is manufactured from a continuously-cast profile.

9. An installation according to at least one of the preceding claims,
**characterised in that**
the coupling is provided such that the two drives of the discs (3, 4) can be operated synchronously.

10. An installation according to at least one of the preceding claims,
**characterised in that**
the drive force can be generated by means of eddy currents induced in the tongue part (5), in particular upon turning the discs (3, 4) past along the tongue part, in particular the discs (3, 4) with their permanent magnets (20, 21).

11. An installation according to at least one of the preceding claims,
**characterised in that**
in each case a supporting roller is provided mounted on a part which is connected for co-rotation to the respective disc (3, 4), in particular mounted by means of ball bearings, the supporting roller being able to be rolled and/or guided on the rail system or on the rail.

12. An installation according to at least one of the preceding claims,
**characterised in that**
on the rail system or on the rail the rolling region or guide region for the supporting roller and/or on the supporting roller the outer surface is concave, in particular on both sides of the rail system which face the respective discs (3, 4), such that restoring forces for stabilising the desired orientation are effective upon deflecting the vehicle from its desired orientation.

13. An installation according to at least one of the preceding claims,
**characterised in that**
a magnetic coupling part (10, 11) is provided on each disc (3, 4), which part has permanent magnets which are arranged in succession in the peripheral direction and which are magnetised in the peripheral direction, or pairs of permanent magnets, each pair having in each case a first permanent magnet which has an outwards-directed, therefore in particular directed perpendicular to the cone surface, direction of magnetisation, and a second permanent magnet which has an inwards-directed, therefore in particular directed perpendicular to the cone surface, direction of magnetisation.

14. An installation according to at least one of the preceding claims,
**characterised in that**
the permanent magnets or the pairs which are magnetised in the peripheral direction are provided in each case in a cutout or recess, in particular groove, in a laminated core or steel part which is encompassed by the respective magnetic coupling part (10, 11).

15. An installation according to at least one of the preceding claims, **characterised in that**
the coupling part (10, 11) in the peripheral direction has in each case alternately a permanent magnet which is magnetised in the peripheral direction, in particular embodied as a pair of permanent magnets, and an iron-containing part, in particular steel part or sheet steel part, in particular the coupling part has in the peripheral direction a periodic sequence of permanent magnet and iron-containing part, in particular steel part or sheet steel part.

## Revendications

1. Installation; comprenant une première partie et une deuxième partie disposée de manière mobile par rapport à la première,
la première partie présentant une pièce en forme de lame en particulier allongée qui s'étend dans la direction de déplacement,
**caractérisée en ce**
**que** la deuxième partie comprend au moins deux disques (3, 4) montés à rotation, entraînables, ayant chacun une portion conique, les axes de rotation des disques (3, 4) se coupant, la pointe de cône ou la direction de rétrécissement des portions coniques étant dirigée vers le point d'intersection,
les axes de rotation étant orientés perpendiculairement à la direction de déplacement,
la partie en forme de lame (5) étant disposée entre les portions coniques des disques (3, 4),
chacun des disques (3, 4) présentant sur sa circonférence, dans la portion conique respective, des aimants permanents (20) dont la direction de magnétisation présente chaque fois une direction alternante par rapport à l'aimant permanent (21) le plus proche en direction circonférentielle, en particulier perpendiculaire à la surface de la portion conique respective,
les disques (3, 4) étant disposés en couplage magnétique mutuel,
un des disques pouvant être entraîné par un moteur électrique (1) disposé sur la deuxième partie, lequel entraîne le disque (3) sur lequel est prévu une première partie d'accouplement (10) qui est couplée magnétiquement à une deuxième partie d'accouplement (11) qui est disposée sur un autre axe de rotation ou arbre sur lequel le galet d'appui (30) est monté, le disque (4) étant lié en rotation avec la partie d'accouplement (11).

2. Installation selon au moins une des revendications précédentes,
**caractérisée en ce**
**que** la partie en forme de lame (5) est une zone partielle d'un système de rails ou d'un rail, le système de rails ou le rail présentant aussi des zones de guidage pour des galets de la deuxième partie réalisée sous la forme d'un véhicule, le système de rails ou le rail étant en particulier réalisé d'une seule pièce.

3. Installation selon au moins une des revendications précédentes,
**caractérisée en ce**
**qu'**au moins un des disques (3, 4) peut être entraîné par un moteur électrique (1), en particulier par un moteur triphasé, en particulier par un moteur synchrone commandé en synchronisme angulaire.

4. Installation selon au moins une des revendications précédentes,
**caractérisée en ce**
**que** les portions coniques sont disposées chacune dans une zone axiale des axes de rotation telle que des plans, dont la normale est la direction de l'axe de rotation et qui sont disposés dans la zone axiale, présentent une intersection non vide lorsqu'ils ne sont pas parallèles l'un à l'autre.

5. Installation selon au moins une des revendications précédentes,
**caractérisée en ce**
**que** le profilé en lame (5) est disposé dans l'union des intersections.

6. Installation selon au moins une des revendications précédentes,
**caractérisée en ce**
**que** chaque aimant permanent (20, 21) est formé de deux ou plus aimants permanents individuels (20, 21) qui sont disposés l'un au-dessus de l'autre perpendiculairement à la surface de la portion conique respective.

7. Installation selon au moins une des revendications précédentes,
**caractérisée en ce**
**que** chaque aimant permanent (20, 21) est formé de deux ou plus aimants permanents individuels (20, 21) qui sont disposés l'un à côté de l'autre en direction circonférentielle dans la portion conique.

8. Installation selon au moins une des revendications précédentes,
**caractérisée en ce**
**que** la partie en forme de lame (5) est en aluminium et/ou que la partie en forme de lame (5) est un profilé coulé en continu.

9. Installation selon au moins une des revendications précédentes,
**caractérisée en ce**
**que** l'accouplement est prévu de façon que les deux entraînements des disques (3, 4) puissent fonctionner de manière synchrone.

10. Installation selon au moins une des revendications précédentes,
**caractérisée en ce**
**que** la force d'entraînement peut être produite au moyen de courants de Foucault induits dans la partie en forme de lame (5), en particulier par.rotation des disques (3, 4) le long de la partie en forme de lame, en particulier des disques (3, 4) avec leurs aimants permanents (20, 21).

11. Installation selon au moins une des revendications précédentes,
**caractérisée en ce**
**qu'**un galet d'appui est prévu, en particulier monté au moyen d'un roulement à billes, chaque fois sur une partie liée en rotation avec le disque (3, 4) respectif, lequel galet d'appui peut rouler et/ou être guidé sur le système de rails ou le rail.

12. Installation selon au moins une des revendications précédentes,
**caractérisée en ce**
**que** la zone de roulement ou la zone de guidage pour le galet d'appui sur le système de rails ou le rail et/ou la surface extérieure du galet d'appui sont concaves, en particulier des deux côtés du système de rails tournés vers les disques (3, 4) respectifs, de façon qu'en cas de déviation du véhicule de son orientation de consigne, des forces de rappel agissent pour stabiliser l'orientation de consigne.

13. Installation selon au moins une des revendications précédentes,
**caractérisée en ce**
**qu'**une partie d'accouplement magnétique (10, 11) est prévue sur chaque disque (3, 4), laquelle présente des aimants permanents disposés successivement en direction circonférentielle, qui sont magnétisés en direction circonférentielle, ou présente des paires d'aimants permanents, chaque paire présentant un premier aimant permanent qui présente une direction de magnétisation orientée vers l'extérieur, donc en particulier perpendiculaire à la surface du cône, et un deuxième aimant permanent qui présente une direction de magnétisation orientée vers l'intérieur, donc en particulier perpendiculaire à la surface du cône.

14. Installation selon au moins une des revendications précédentes,
**caractérisée en ce**
**que** les aimants permanents magnétisés en direction circonférentielle ou les paires d'aimants permanents sont prévu(e)s chaque fois dans un évidement ou un renfoncement, en particulier une encoche, d'un paquet de tôles ou d'une pièce en acier compris(e) par la partie d'accouplement magnétique (10, 11) respective.

15. Installation selon au moins une des revendications précédentes,
**caractérisée en ce**
**que** la partie d'accouplement magnétique (10, 11) présente en direction circonférentielle, en alternance, un aimant permanent magnétisé en direction circonférentielle, en particulier réalisé sous la forme d'une paire d'aimants permanents, et une pièce contenant du fer, en particulier une pièce en acier ou en tôle d'acier, en particulier que la partie d'accouplement présente en direction circonférentielle une succession périodique d'aimants permanents et de pièces contenant du fer, en particulier de pièces en acier ou en tôle d'acier.
